# EUROPEAN PATENT APPLICATION

(11) **EP 4 465 230 A1**
(43) Date of publication of application: **20.11.2024**
(21) Application number: 24175929.9
(22) Date of filing: 15.05.2024
(51) Int. Cl.: G06Q 30/04, G06Q 30/06, G06Q 50/40, H04L 9/40

(54) **AUTOMATIC TRACKING OF RESOURCE USAGE BY VEHICLES**

(30) Priority: 17.05.2023 US 202363502837 P
(71) Applicant: INTEGRITY SECURITY SERVICES LLC, Santa Barbara, CA 93101 (US)
(72) Inventor: Kapoor, Amit, Santa Barbara, CA 93101 (US)
(74) Representative: HWP Intellectual Property

(57) **Abstract**

Systems and methods for tracking usage of multiple resources by a vehicle that is associated with a contract certificate. The system includes: a first resource management operator (RMO) that tracks usage of a first resource, e.g., electricity, by the vehicle and that generates a first resource usage record that includes information from the certificate; a second RMO that tracks usage of a second resource, e.g., road usage, by the vehicle; and a multi-resource interface provider (MRIP) that provides a communication channel between the first RMO and the second RMO. The MRIP may obtain the first resource usage record; generate a revised first resource usage record from it, including certificate information; and provide the revised usage record to the second RMO. The second RMO may generate a multi-resource usage record using combined data from the revised first resource usage record and the tracked data about the usage of the second resource.

## Description

### CROSS-REFERENCE TO RELATED APPLICATIONS

This application claims the benefit and priority of U.S. Provisional Application No. 63/502,837, filed on 17 May 2023, which is hereby incorporated by reference in its entirety.

### FIELD OF THE INVENTION

This invention relates to the systems, devices, computer applications, and methods for automatically tracking resource consuming activities related to vehicles.

### BACKGROUND

Vehicles, such as cars, trucks, aircraft (including unmanned aerial vehicles), watercraft, etc. consume various resources such as gasoline, electricity, oil, road usage, (for example, time and/or distance spent on a specific road(s), such as a toll road, which may reflect e.g., consumption of traffic capacity and roadway lifespan resources, among other things), parking space, storage space, communication resources, etc. For example, electric vehicles consume electricity when they recharge, e.g., at a public charging station or the like. For another example, electric vehicles also consume toll road resources when they drive on a toll road.

Current conventional systems and techniques use separate, disparate infrastructures, devices, and processes for tracking the resources consumed by a vehicle. In some systems, the resource tracking information may be used in compensating the resource suppliers. Such conventional systems and techniques are inefficient and expensive because they each require their own infrastructure, such as servers, communication channels, in-car transponders or similar devices (e.g., electronic toll collection devices, such as an EZPass^{®} transponder), websites, mobile applications, etc., and much of the infrastructure for a given resource is duplicative of the infrastructure used for another resource. Conventional resource-usage-tracking systems and techniques are also user-unfriendly and inefficient because they require a user to learn and utilize multiple interfaces, logins, devices, etc. for each different type of vehicle-related resource.

Accordingly, it is desirable to provide improved systems, methods and techniques for securely and easily tracking multiple resources that are consumed by a vehicle in a single, unified manner. Various embodiments described herein address the above-noted and other drawbacks associated with the conventional resource-usage-tracking systems and techniques.

### BRIEF SUMMARY

This summary is intended merely to introduce a simplified summary of some aspects of one or more implementations of the present disclosure. Further areas of applicability of the present disclosure will become apparent from the detailed description provided hereinafter. This summary is not an extensive overview, nor is it intended to identify key or critical elements of the present teachings, nor to delineate the scope of the disclosure. Rather, its purpose is merely to present one or more concepts in simplified form as a prelude to the detailed description below.

In one aspect, a system for tracking usage of multiple resources by a vehicle that is associated with a contract certificate is disclosed. The system includes a first resource management operator that tracks usage of a first resource (e.g., electricity) by the vehicle associated with the contract certificate and that generates a first resource usage record, wherein the first resource usage record includes information from the contract certificate. The system also includes a second resource management operator that tracks usage of a second resource (e.g. road usage) by the vehicle associated with the contract certificate. The system further includes a multi-resource interface provider that is operably connected with the first resource management operator and the second resource management operator. The multi-resource interface provider performs operations that include: obtaining the first resource usage record from the first resource management operator; generating a revised first resource usage record from data in the first resource usage record, wherein the revised first resource usage record is in a format that is usable by the second resource management operator and the revised first resource usage record includes information from the contract certificate; and providing the revised first resource usage record to the second resource management operator. The second resource management operator performs operations that include: identifying data about the usage of the second resource (e.g., road usage) by the vehicle based on the information from the contract certificate; combining data from the revised first resource usage record with the identified data about the usage of the second resource by the vehicle associated with the contract certificate; generating a multi-resource usage record using the combined data; and providing information from the multi-resource usage record to a user associated with the vehicle.

In another aspect of the system, the multi-resource interface provider performs operations that include: producing the contract certificate; and providing the contract certificate to the second resource management operator. And, the second resource management operator performs operations that include: providing the contract certificate to the vehicle. In an additional sub aspect, the second resource management operator performs operations that include: associating the contract certificate with a transponder that is associated with the vehicle.

In another aspect of the system, the contract certificate is stored by the vehicle.

In another aspect of the system, the contract certificate is stored by a transponder associated with the vehicle.

In two other aspects of the system, the first resource is at least one of: an electricity resource, a road usage resource, or a department of transportation (DOT) resource; and/or the second resource is at least one of: an electricity resource, a road usage resource, or a department of transportation (DOT) resource.

In another aspect of the system, the operation for generating the revised first resource usage record from data in the first resource usage record includes:
including data from the contract certificate in the revised first resource usage record.

In another aspect of the system, the operation for generating the revised first resource usage record from data in the first resource usage record includes:
converting data from the first resource usage record into the format that is usable by the second resource management operator.

In a second aspect, a system for managing data from a first resource management operator that tracks usage of a first resource (e.g., electricity) by a vehicle associated with a contract certificate is disclosed. The system includes: a second resource management operator that tracks usage of a second resource (e.g., road usage) by the vehicle associated with the contract certificate; and a multi-resource interface provider that is operably connected with the first resource management operator and the second resource management operator. The multi-resource interface provider performs operations that include: obtaining the first resource usage record from the first resource management operator, wherein the first resource usage record includes information from the contract certificate; generating a revised first resource usage record from data in the first resource usage record, wherein the revised first resource usage record is in a format that is usable by the second resource management operator and includes information from the contract certificate; and providing the revised first resource usage record to the second resource management operator. The second resource management operator performs operations that include: identifying data about the usage of the second resource (e.g., road usage) by the vehicle based on the information from the contract certificate; combining data from the revised first resource usage record (e.g., electricity) with the identified data about the usage of the second resource by the vehicle associated with the contract certificate; generating a multi-resource usage record using the combined data; and providing information from the multi-resource usage record to a user associated with the vehicle.

In another aspect of the system, the multi-resource interface provider performs operations that include: producing the contract certificate; and providing the contract certificate to the second resource management operator. And, the second resource management operator performs operations that include: providing the contract certificate to the vehicle. In an additional sub aspect, the second resource management operator performs operations that include: associating the contract certificate with a transponder that is associated with the vehicle.

In another aspect of the system, the contract certificate is stored by the vehicle.

In another aspect of the system, the contract certificate is stored by a transponder associated with the vehicle.

In two other aspects of the system, the first resource is at least one of: an electricity resource, a road usage resource, or a department of transportation (DOT) resource; and/or the second resource is at least one of: an electricity resource, a road usage resource, or a department of transportation (DOT) resource.

In another aspect of the system, the operation for generating the revised first resource usage record from data in the first resource usage record includes:
including data from the contract certificate in the revised first resource usage record.

In another aspect of the system, the operation for generating the revised first resource usage record from data in the first resource usage record includes:
converting data from the first resource usage record into the format that is usable by the second resource management operator.

It is intended that combinations of the above-described elements and those within the specification may be made, except where otherwise contradictory.

### BRIEF DESCRIPTION OF THE DRAWINGS

The accompanying drawings, which are incorporated into and constitute a part of this specification, illustrate embodiments of the disclosure and together with the description, serve to explain the principles thereof.
FIG. 1 is a block diagram showing an example of a system for tracking vehicle-related resource usage, consistent with embodiments of the invention;
FIG. 2 illustrates information from an example of a multi-resource usage record, consistent with embodiments of the invention;
FIG. 3 is a block diagram of an example of a computing system that may be used for hosting and implementing systems, functions, operations, and methods consistent with implementations of the invention;
FIG. 4 is a flowchart showing an example of a process for generating a revised resource usage record for use in a multi-resource tracking record, consistent with embodiments of the invention; and
FIG. 5 is a flowchart showing an example of a process for generating a multi-resource tracking record, consistent with embodiments of the invention.

### DETAILED DESCRIPTION

Reference will now be made in detail to embodiments of the invention, examples of which are illustrated in the accompanying figures.

Various embodiments and implementations consistent with the invention provide systems, components, methods, and computer program products for automated tracking of two or more resource consuming activities (like electric charging, gasoline usage, road usage (e.g. as measure by road tolls), etc.) performed by vehicles (gas or electric automotive vehicles, unmanned aircraft, etc.) between multiple parties, such as resource suppliers (e.g., gasoline station operators, charging station operators, toll road operators, etc.) and resource users (e.g., electric vehicle owners, gasoline vehicle owners). Various embodiments may use verified credentials (e.g., digital certificates, etc.) to implement secure resource-usage tracking functions. In various embodiments, the tracking functions for resource consuming activities may include functions for collecting, calculating, storing and/or communicating resource usage amounts, and optionally for payment and settlement for consumed resources, among other things.

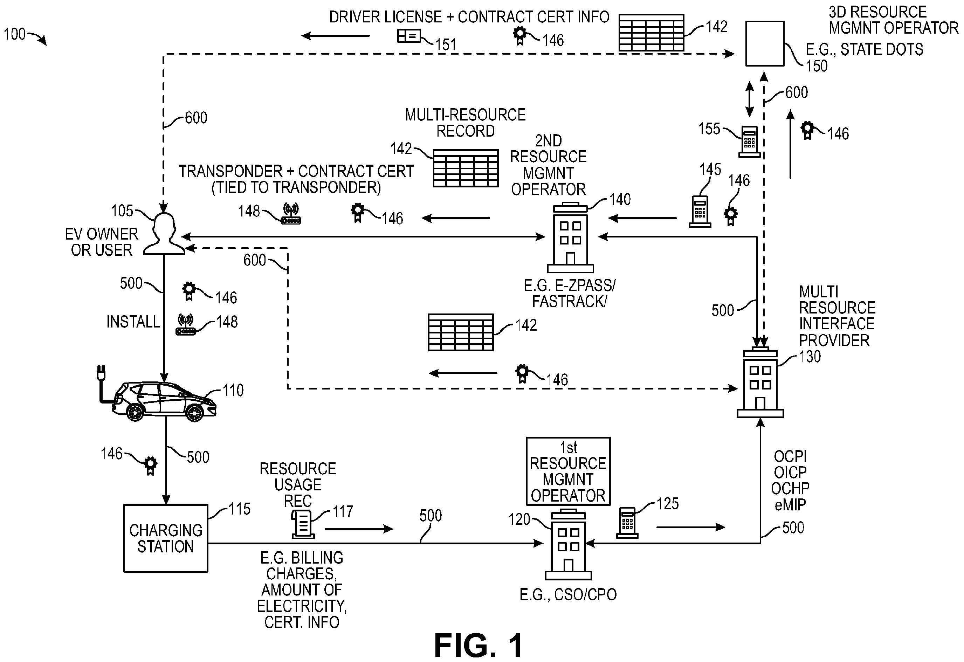

FIG. 1 is a block diagram showing an example of a system 100 for tracking vehicle-related resource usage, consistent with embodiments of the invention. Note that the labels "first," "second," and "third" as used in FIG. 1 and elsewhere herein with respect to the resource management operators are for purposes of ease of explanation and differentiation only, and are not meant to denote a particular order or priority or functionality. Focusing first on the communication paths denoted by the solid-line arrows labelled 500, which represent an embodiment that changes and technically improves the infrastructure (e.g., computer(s)) of a resource management operator (RMO), (such as the second resource management operator 140), to add new functionality as described herein, as well as creating a new multi-resource interface provider (MRIP) 130, which is a novel entity with new technical functionality, and which may be embodied as a computing system (e.g., a server computer(s)) configured to perform the operations and functions described herein. In some embodiments, an RMO, such as the road usage RMO 140, may be a technically modified and improved toll management provider, similar to EZPass^{®} or FasTrak^{™}, and the improvements may include functionality and devices to also manage and track of electricity usage (e.g., charging) by an electric vehicle 110, in addition to toll road usage. The improvements may also include a new interface capability, such as a new application programming interface (API), that enables the second RMO 140 to receive and process data (e.g., in the form of a revised resource usage record 145) reflecting the usage of a different resource (e.g., electricity) by the same specific vehicle 110.

In this example, the user or owner 105 of the electric vehicle (EV) 110 sets up an account for toll road usage tracking with the improved second resource management operator 140 and receives a transponder 148 that is installed in the EV 110. In addition, the owner 105 may request charging electricity usage tracking and obtain (e.g., from or via the improved road usage RMO 140) a contract certificate 146. In various implementations, contract certificate 146 is associated, linked, tied in, or cryptographically bound with the transponder 148. In various implementations, the system 100 may use the contract certificate 146, and/or the information therein, to provide a link, identifier, key, index, or the like that is in common among the various RMOs (e.g., 120, 140, 150) and the MRIP 130 such that an RMO and/or the MRIP 130 can consolidate, manage, track, and otherwise process the resource usage data that is associated with a specific vehicle 110 and/or transponder 148.

In various embodiments, the contract certificate 146 is a digital certificate that the road usage RMO 140 obtains from a multi-resource interface provider 130. In some embodiments, the multi-resource interface provider 130 may create the contract certificate 146. In some other embodiments the multi-resource interface provider 130 may request and obtain the contract certificate 146 from a Security Credential Management System (SCMS) (not shown).

In various embodiments, the contract certificate 146 may be associated with the transponder 148 and/or the EV 110 when it is transferred from the second resource management operator 140 to the EV owner 105. In some embodiments, the contract certificate 146 may be uniquely or solely associated with the transponder 148 and/or the EV 100, and thus information (e.g., a serial number, a unique identifier string, or the like) from the contract certificate 146 may be used to positively identify the transponder 148 and/or the EV 110, as well as to positively identify data (e.g. resource usage data) that is attributable to the transponder 148 and/or the EV 110. In some embodiments, the contract certificate 146 may be installed or stored on and used by (e.g., communicated from) the EV 110. The owner 105 may install the contract certificate 146 in some embodiments. In additional or alternative embodiments, the contract certificate 146 may be installed or stored on and used by (e.g., communicated from) the transponder 148.

In the example of FIG. 1, when the EV 110 is driven through a road usage monitoring station, such as a toll booth (not shown), upon entering or exiting a road, the transponder 148 communicates with the monitoring station (e.g., toll booth), which may, in turn, communicate road-usage information to the computers and other infrastructure of the road usage (second) RMO 140. In various implementations, the road-usage information includes date information, time information, transponder (148) identification information, contract certificate (146) information, road usage information (e.g., distance driven), and/or location information. In various embodiments, the road usage (second) RMO 140 may track (e.g., collect, process, record, and/or store, etc.) the EV 110's (and/or user 105's) usage of roadway resources, optionally calculate applicable charges for the distance of roadway used, communicate road-resource-usage amounts, etc. In some embodiments, the second RMO 140 may generate, create, provide, communicate and/or store internally a road resource usage record (not shown in the example of FIG. 1). In various implementations, the road resource usage record includes information from the certificate 146 enabling identification of the EV 110, the transponder 148, and/or the owner 105. In various implementations, the road resource usage record may be similar to the electricity resource usage records 117, 125 described below. In some embodiments, the road resource usage record may aggregate or consolidate the road usage data from several different sources, e.g., from several monitoring stations or toll booths.

Somewhat similarly, when the EV 110 is charged with electricity from a charging station 115, the EV 110 (or the transponder 148 in some embodiments) communicates the contract certificate 146 (and/or information therefrom) to or via the charging station 115 and/or the computers and other infrastructure of a first resource management operator (RMO) 120, which in this example is a charging station operator (CSO), which may also be referred to as a charging point operator (CPO). In embodiments, the information from the contract certificate 146 informs and provides secure authorization to the charging station 115 and the first RMO 120 regarding the identity of the vehicle 110, the transponder 148, and/or the owner 105 that are/is consuming or using electricity from the charging station 115. In some embodiments, the as well as information regarding the amount of electricity consumed or used. Optionally, the information from the contract certificate 146 may also identify a previously established account of the owner 105 in which to track (e.g., process, record, store, etc.) the electricity resource usage amount etc., and optionally the monetary charges for the electricity.

In the example shown, the charging station 115 may create an electricity resource usage record 117, which it communicates to the charging station RMO 120. In various embodiments, the resource usage record 117 includes data representing the amount of electricity used to charge the EV 110, information from the certificate 146 associated with (e.g., identifying) the EV 110, the transponder 148, and/or the owner 105, and/or optionally the monetary charges for the electricity used. The information from the certificate 146 may include information (e.g., an ID number or the like) that identifies, or uniquely identifies, the EV 110, the transponder 148, and/or the owner 104. In some embodiments, the communications between the charging station RMO 120 and the MRIP 130 may follow an EV roaming charging protocol, such as the open charge point interface (OCPI) protocol, the open interchange protocol (OICP), OCHP, eMIP, or the like

In various embodiments, the charging station RMO 120 may track (e.g., collect, process, record, and/or store, etc.) the EV 110's (and/or user 105's) usage of the electricity resource, optionally calculate applicable charges for the amount of electricity used, communicate electricity-usage amounts, etc. As shown in the example of FIG. 1, the first RMO 120 may generate, create, provide, and/or communicate an electricity resource usage record 125 for a MRIP 130. In various implementations, the resource usage record 125 includes information from the certificate 146 enabling identification of the EV 110, the transponder 148, and/or the owner 105. In various implementations, the resource usage record 125 may be similar to, or the same as, the resource usage record 117. In some embodiments, the resource usage record 125 may aggregate or consolidate the data from several different EVs 110 and/or from several different charging stations 115 and/or from several different resource usage records 117 into a single resource usage record 125 that contains electricity resource usage information from multiple sources. In some embodiments, the communications between the charging station RMO 120 and the MRIP 130 may follow an EV roaming charging protocol, such as the open charge point interface (OCPI) protocol, the open interchange protocol (OICP), OCHP, eMIP, or the like.

The novel multi-resource interface provider 130 may function to process, route, translate, convert, and transfer information between two or more different resource operators that are not technically capable of communicating directly with each other (e.g., the second RMO 140 and the first RMO 120 and the third RMO 150), such that the usage of two or more resources (e.g., toll roads and electricity) are consolidated and tracked in a single account, which may be maintained by one of the resource operators, for instance, by the road usage RMO 140 in the example of FIG. 1. The MRIP 130 and/or the improved road usage RMO 140 embody a new device(s) and novel technical functionality that enables the communicating, tracking, managing, and optionally paying for the use of multiple resources related to the vehicle 110. They also provide the novel technical means for a user 105 to display, track, manage, and optionally pay for the use of multiple resources related to the vehicle 110 using a single device, a single interface, and a single account, e.g., hosted on the single website of the second resource management operator 140 or of the MRIP130. This new system provides several technical advantages over conventional systems that require the user to employ several different devices (e.g., first RMO 140 and second RMO 120) to display, track, manage, and optionally pay for the use of multiple resources (e.g. road usage resources and electricity resources) related to the vehicle 110. These technical advantages include using less memory (one account to store the resource usage data instead of two or more), using less bandwidth (one login / one communication session instead of two or more), using fewer devices (one operator device to manage multiple resources instead of two or more), using less time (one login / one communication session instead of two or more), being more secure (one account / one login / one communication session to secure instead of two or more), etc.

As shown in the example of FIG. 1, the MRIP 130 may receive or otherwise obtain a resource usage record 125 from the charging station RMO 120, and the resource usage record 125 may include information describing the amount of electricity resource used by the EV 110 for charging and information from the certificate 146 associated with the EV 110, among other things.

The MRIP 130 may process the resource usage record 125 and use information from it to generate or create a revised resource usage record 145 in a format that is usable by the second RMO 140, which the MRIP 130 provides (e.g., transmits, routes, or make accessible) to the second RMO 140. For example, the MRIP 125 may reformat, convert, translate, consolidate, or otherwise process the information from the resource usage record 125 to produce a different, revised resource usage record 145 that is configured as expected by, and/or to be compatible with, the second RMO 140. For example, the MRIP 130 may generate a revised resource usage record 145 that is in the format that is required by an interface, such as an application programming interface (API), of the second RMO 140. In various embodiments, the revised resource usage record 145 includes at least properly formatted information describing the amount of electricity resource used by the EV 110 and properly formatted information from the contract certificate 146 associated with the EV 110. In some implementations, the revised resource usage record 145 may contain all, or a portion, of the information found in the resource usage records 117 and/or 125.

The road usage (second) RMO 140 may reformat, convert, translate, consolidate, or otherwise process the revised resource usage record 145 to use information from it, in combination with the road usage (second) RMO 140's information about road resource usage by the same vehicle 110, transponder 148, and/or owner 105 associated with same contract certificate 146, to generate or create a multi-resource usage record 142. For example, the road usage RMO 140 may use the information from the contract certificate 146 associated with the EV 110, (which is in the revised resource usage record 145 received from the MRIP 130) to identify stored road resource usage data for the vehicle 110 that corresponds to, or is otherwise associated with, the contract certificate 146. More specifically in terms of the example of FIG. 1, the road usage (second) RMO 140 may use the information from the contract certificate 146 to identify the correct user account and the correct toll road resource usage information stored therein that corresponds to the electricity resource usage information for the same user from the revised resource usage record 145.

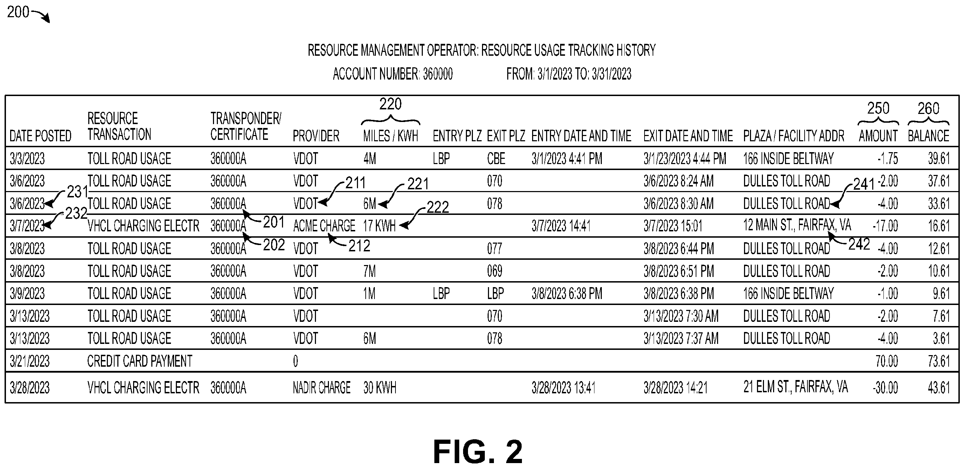

The road usage RMO 140 may then combine the electricity resource usage information from the revised resource usage record(s) 145 (e.g., as obtained and tracked by the first RMO 120) with the road resource usage information obtained from a monitoring station such as a toll booth or the like, (not shown; note that an EZPass^{®} toll booth is a well-known example), to generate a single multi-resource usage record 142. The road usage RMO 140 may then provide the multi-resource usage record 142 to the owner / user 105 associated with the vehicle 110 and with the contract certificate 146, for example by displaying information from the multi-resource usage record 142 on a website, printing it, emailing it to the owner / user 105, etc. An example of at least some of the information included in a multi-resource usage record 142 is shown in FIG. 2.

As exemplified in the embodiment of FIG. 1, the system 100 automatically keeps track of two or more of the resource consuming activities (e.g., toll-road-resource consumption and electricity consumption) related to a vehicle (e.g., EV 110), and the novel multi-resource usage record 142 stores and documents those resource consuming activities in a single source.

Some embodiments that are compatible with the example of FIG. 1 may also optionally include payment in exchange for various resource tracking services, devices, and/or digital assets, such as for the contract certificate 146. For instance, the EV owner 105 may initially pay money to the second resource management operator 140 in exchange for the transponder 148 and/or the contract certificate 146, for example, when setting up a user account with the second resource management operator 140. The EV owner 105 may later periodically send money to pay for the resources and services used by the EV 110, such as road usage (e.g., as measured by tolls) and charging electricity. In some such embodiments, the multi-resource usage record 142 may include information regarding the amount of money owed for each resource.

In some such embodiments, the second resource management operator 140 may distribute money, (which may be a portion of the money received from the owner 105), to the appropriate entities to compensate them for the resources and services the entities provided in the system 100. For example, the second RMO 140 may initially distribute money to the MRIP 130 at user-account-setup time in exchange for the contract certificate 146, among other things. The second RMO 140 may also periodically distribute money to a toll road operator (not shown) and to the MRIP 130 for ongoing services and resource usage. For instance, a portion of the money periodically provided to the MRIP 130 may compensate the MRIP 130 for its services and infrastructure that provide the links to resource providers, such as the charging station RMO 120 and/or the charging station 115, and a portion may be used to pay for the charging electricity resource used by the EV 110.

As just mentioned, the MRIP 130 may periodically distribute money to the first RMO 120 to pay for the electricity and services used to charge the EV 110. That money may be a portion of the money received from the second resource management operator 140.

Still referring to FIG. 1, focus now on the communication paths denoted by the dashed-line arrows labelled 600, which, among other things, represent an embodiment that changes the infrastructure of a third resource management operator 150, such as department of transportation (DOT) RMO in this example, to add new functionality as described herein. The department of transportation may be administered by a governmental entity, such as a state of the United States. The dashed lines are used to make it easier to distinguish the paths 600 from the paths 500. In some embodiments, the DOT RMO 150 may be a technically modified and improved to include functionality, digital assets, and devices (e.g., computers) to also manage the tracking of electricity usage (e.g., charging) by an electric vehicle 110, in addition to tracking usage of state-provided resources, such as a vehicle registration, driver's license privileges, safety and emission inspection resources and services, state road usage (e.g., road taxes), state infrastructure usage, (e.g., vehicle property taxes), etc. In one such embodiment, the user or owner 105 of the electric vehicle (EV) 110 sets up an account associated with obtaining a driver's license 151, (or other state-provided resource, such as a registration for the EV 110, and the like) with the improved DOT RMO 150. The account may include a payment method, such as a credit card on file. The owner 105 also chooses to automatically track his electricity resource usage, along with his DOT resource usage, via the DOT account, which is a novel technical ability provided by the system 100. Upon setting up the account, the owner 105 receives the license 151 and a contract certificate 146, which is described above, that enables the resource usage tracking. In various such implementations, this contract certificate 146 is associated, linked, tied in, or cryptographically bound with the license 151.

In some embodiments, the contract certificate 146 is a digital certificate that the DOT RMO 150 obtains from the MRIP 130 and then sends to the owner 105, as represented along the dashed-line communication path 600 at the top of FIG. 1. In other embodiments, the DOT RMO 150 may provide a link or the like to the owner 105 such that the owner can download or otherwise obtain the contract certificate 146 directly from a MRIP 130, as represented by the left-right communication path 600 in the middle of FIG. 1. In still other embodiments, the MRIP 130 is implemented as a "white label" backend to the DOT RMO 150's frontend website or other infrastructure, wherein the owner 105 interacts with appears to be the DOT RMO 150's website but is actually a webpage or the like transparently provided by the MRIP 130, e.g., via the DOT RMO 150's website. In such embodiments, from the viewpoint of the user 105, the contract certificate 146 appears to come from the DOT RMO 150 but actually comes from the MRIP 130.

As noted previously, in various embodiments, the contract certificate 146 may be installed or stored on and used by (e.g., communicated from) the EV 110.

When the EV 110 is charged with electricity from a charging station 115, the EV communicates the contract certificate 146 (and/or information therefrom) to the charging station 115 and/or the computers and other infrastructure of the first RMO 120, and the charging electricity resource usage amount is obtained by the MRIP 130, e.g., via the first RMO 120, as described above. In some white label implementations, the first RMO 120 may be, in effect, submitting a resource usage record 125 to the DOT RMO 150, but the resource usage record 125 is processed by the MRIP 130 acting as a backend to the DOT RMO 150.

In some embodiments, the MRIP 130 may generate or create a revised resource usage record 155 for the electricity resource usage and provide it to the DOT RMO 150. The DOT RMO 150 may then use information from the revised resource usage record 155 to create or update a multi-resource usage record 142, which is provided or otherwise made accessible to the owner 105. For example, the DOT RMO 150 may combine the electricity resource usage information (e.g., as obtained and tracked by the MRIP 130) from the revised resource usage record(s) 155 with the DOT resource usage information (e.g., registration information, emissions information, licensing information, etc.) for the EV 110 into a single multi-resource usage record 142, which may be displayed on a DOT website or printed and sent to the owner 105, as represented by the dashed-line communication path 600 at the top of FIG. 1. The improvements and novel functionalities of the third RMO 150 are similar to those of the second RMO 140 as described previously. In various implementations, there may be various types of resource management operators-for example the DOT (third) RMO 150 may be one specific instance of a resource management operator and the road usage (second) RMO 140, (e.g., an improved EZPass^{®} RMO),may be another specific instance of a resource management operator. Similarly, as mentioned, the charging station RMO 120 may be another specific instance of a resource management operator.

In other embodiments, instead of creating a revised resource usage record 155 for the electricity resource usage and providing it to the DOT RMO 150, the MRIP 130 may receive or obtain a resource usage record 155 containing data about DOT resource usage from the DOT RMO 150 and use it to create a multi-resource usage record 142, which is provided or otherwise made accessible to the owner 105, as represented by the dashed-line communication path in the middle of FIG. 1. In such embodiments, the multi-resource usage record 142 provided along communications path 600 to the owner 105 may include information about DOT resource usage, electricity resource usage, and road resource usage, or a combination of at least two of these. The same multi-resource usage record 142 may also include information from the contract certificate 146.

Similar to the embodiments mentioned above in relation to the solid-line communication paths 500, some embodiments related to the dashed-line communication paths 600 may also optionally include payment for resource usage and/or in exchange for various resource tracking services, devices, and/or digital assets. In some such embodiments, the money received from the owner 105 for resources used by the vehicle 110 is distributed by the MRIP 130 to other components of the system 100. In other such embodiments, a portion of the money received from the owner 105 is distributed by the DOT RMO 150 to the MRIP 130, which further distributes portions of the money to other components of the system 100. These distributions are similar to those described with regard to the solid-line communication paths 500.

In various implementations, the road usage (second) RMO 140, the MRIP 130, the charging station (first) RMO 120, the DOT (third) RMO 150, and/or the charging station 115 may be implemented partially or wholly using one or more computing systems that execute software or firmware instructions, such as a server (e.g., having at least one processor and associated memory and communication devices) or other computer. The computing systems may be configured, e.g., using the instructions and communications hardware, to implement the processes, operations, and functions described herein. In various implementations, the communication paths 500 and 600 may include one or more networks, which may be or include a digital network(s), (e.g., the Internet), cellular networks, wireless networks, and other networks.

One of ordinary skill will recognize that the components, connections, processes, data, operations, and implementation details shown and described in FIG. 1 are examples presented for conciseness and clarity of explanation. Other components, processes, implementation details, and variations may be used without departing from the principles of the invention, as this example is not intended to be limiting and many implementations are possible. For instance, although the system 100 is shown with a charging station RMO 120, other implementations may omit the charging station RMO 120 such that the charging station 115 interacts directly with the MRIP 130. For another instance, the functions of the second resource management operator 140 and the MRIP 130 may be combined and implemented in a single computing system, instead of two entities as shown. For yet another instance, the vehicle 110 may be a gasoline powered vehicle, and the charging station 115 may be a gasoline station that functions and interacts with the system 100 in a manner similar to that described for the charging station 115, but for tracking and managing gasoline resources instead of electricity resources. Other variations are possible.

FIG. 2 illustrates information 200 from an example of a multi-resource usage record 142, consistent with embodiments of the invention. In the example of FIG. 2, the information 200 is formatted in a manner that might be displayed on a webpage (e.g., on a webpage from the website of a first road usage RMO 140, a DOT RMO 150, or an MRIP 130 that is visible to the owner 105 after they log into their account) or on a report that is sent to an owner 105, either physically or electronically.

As shown in this example, the first, leftmost column indicates the date on which the EV 110, which includes the transponder 148 and the certificate 146, used a resource that is being tracked by the system 100. The second from the left column indicates the resource that was used by the EV 110 on each date.

The third column indicates the identity of the transponder (e.g., transponder 148) and/or the contract certificate (e.g., certificate 146) of the EV 110 that used the resource. The fourth column indicates the entity that provided the resource that was used.

The fifth column 220 "Miles / kWh" indicates the amount of resource that was used by the EV 110. The sixth through ninth columns contain information indicating the details of the time, date and place that a toll road resource was used by the EV 110. The tenth column indicates the plaza or address of each toll or electricity resource transaction.

The eleventh column 250 "Amount" and the twelfth column 260 "Balance" are optional columns used for embodiments that track the amount of money charged for each resource transaction and the current money balance in the account of an owner 105.

For a specific example of a road resource usage transaction, refer to the third row 231 of information for 6 March 2023 from the multi-resource usage record shown in the display 200 of FIG. 2. Row 231 tracks information about road resource usage, e.g., by EV 110, and records that the transponder (e.g., 148) having the identifier "36000A" (reference 201) used a Virginia Department of Transportation (reference 211) toll road for 6 miles (reference 221), and specifically it was the Dulles Toll Road (reference 241). Although this example is for a toll road, other implementations may track the usage of non-toll roads, e.g., non-toll roads that have transponder readers placed at their entrances and exits.

For a specific example of an electricity resource usage transaction, refer to the fourth row 232 of information for 7 March 2023 from the multi-resource usage record 142 shown in the display 200 of FIG. 2. Row 232 tracks information about electricity resource usage, and records that the electric vehicle (e.g., 110) that is associated or correlated with the transponder (e.g., transponder 148) having the identifier "36000A" (reference 202) used an ACME charging station (reference 212) to charge up with 17 kWh of electricity (reference 222), and the address of the ACME charging station was 12 Main St., Fairfax, Virginia (reference 242).

In various embodiments, including the example of FIG. 1, the EV 110 does not interact with the charging station 115 via the transponder 148, but instead interacts with the charging station 115 via the contract certificate 146, and the MRIP 130 looks up or otherwise identifies the correlation between the contract certificate 146 and the transponder 148, and provides this information to the road usage RMO 140, which can then use the associated transponder identifier "36000A" (reference 202) in the display of the multi-resource usage record 142. This conversion of the contract certificate identifier to the transponder identifier may be preferable in embodiments wherein the account for the user 105 has been traditionally associated with a transponder 148 (e.g., an EZPass^{®} account and transponder). As noted previously, in some embodiments, the contract certificate 146 may be cryptographically tied to or associated with the transponder 148, and in some such embodiments, the MRIP 130 may derive or discover the identity of the transponder using information from the contract certificate 146. In some other embodiments, an identifier for the contract certificate 146 may be used instead of or in addition to the transponder identifier.

It should be noted that although this FIG. 2 example of a display 200 of at least some of the information from a multi-resource usage record 142 illustrates the tracking of two resources-- road resources and electricity resources--embodiments consistent with the invention may include other, additional, and/or different resources, such as: DOT resources, (for example, licensing resources (e.g., services), vehicle registration resources, vehicle testing resources (e.g., emissions and safety testing), state infrastructure (e.g., road and bridge) resource usage, etc.); fuel resources, (for example, gasoline or diesel, which may be tracked in a manner similar to electrical charging); parking space resources; digital asset resources, (for example software that is downloaded into a vehicle); and/or other resources consumed by, or in association with, a vehicle (e.g., 110).

As a corollary, it should be similarly noted that although the system 100 of FIG. 1 illustrates the devices, systems, processes, operations, and infrastructure for automatically tracking two or three vehicle-related resources: road resources, electricity, and DOT resources, embodiments consistent with the invention may include additional, other or different resources, as just explained.

The two rightmost columns of FIG. 2--column 250 "amount" and column 260 "balance"--are optional and illustrate an embodiment that keeps track of the charges and payments made by a user (e.g., owner 105) for the resources consumed by, or in conjunction with, their vehicle (e.g., 110) in addition to tracking multiple resource usages.

One of ordinary skill will recognize that the information, the arrangement, and the details shown and described in FIG. 2 are examples presented for conciseness and clarity of explanation. Other data, arrangements, implementation details, and variations may be used without departing from the principles of the invention, as this example is not intended to be limiting and many implementations are possible. For instance, the display 200 and/or the multi-resource usage record 142 could include just a column for a resource type (e.g., road usage and charging electricity); a column for a transponder / certificate identifier; and a column for an amount of resource used (e.g., miles or kWh. Other variations are possible.

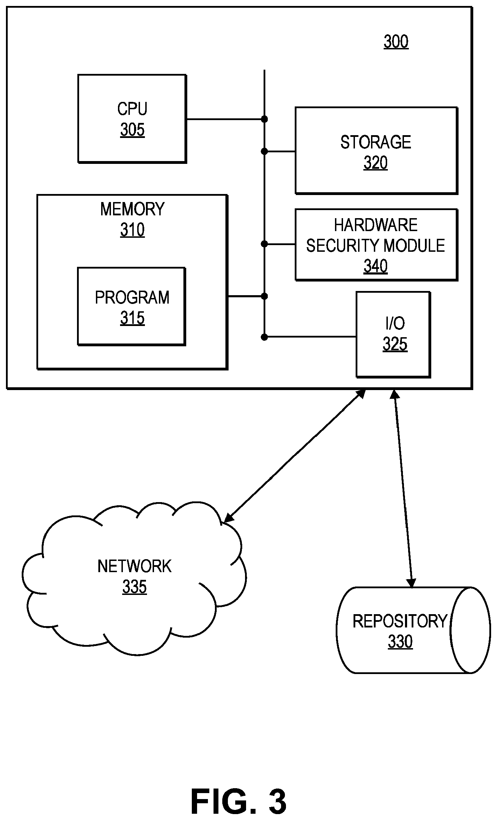

FIG. 3 is a block diagram of an example of a computing environment which includes a computing system 300 that may be used for implementing systems, devices, records, processes, operations, and methods consistent with implementations of the invention. Other components and/or arrangements may also be used. In some implementations, one or more computing system 300 may be used to implement, partially or fully, various components, processes, operations, and data records described in relation to FIGs. 1, 2, 4 and 5, such as the multi-resource interface provider 130, the improved road usage (second) RMO 140, the improved charging station (first) RMO 120, and/or the improved DOT (third) RMO 150, among other things. In some implementations, a series of computing systems similar to the computing system 300 may be each customized or configured with specialized hardware and/or programmed as a specialized server to implement one or more of the features described herein, and may communicate with each other via a network 335.

In the example shown in FIG. 3, the computing system 300 includes a number of components, such as a CPU 305, a memory 310, an input/output (I/O) device(s) 325, a hardware security module (HSM) 340, and a storage device 320. The computing system 300 can be implemented in various ways. For example, an implementation as an integrated platform (such as a server, workstation, personal computer, laptop, etc.) may comprise a CPU 305, a memory 310, a nonvolatile storage 320, and I/O devices 325. In such a configuration, the components 305, 310, 320, and 325 may connect and communicate through a local data bus and may access a data repository 330 (implemented, for example, as a separate database system) via an external I/O connection. The I/O component(s) 325 may connect to external devices through a direct communication link (e.g., a hardwired or local wifi connection), through a network, such as a local area network (LAN) or a wide area network (WAN, such as a cellular telephone network or the Internet), and/or through other suitable connections. The system 300 may be standalone, or it may be a subsystem of a larger system.

The CPU 305 may be one or more known processor or processing devices, such as a microprocessor from the Core^{™} family manufactured by the Intel^{™} Corporation of Santa Clara, CA or a microprocessor from the Athlon^{™} family manufactured by the AMD^{™} Corporation of Sunnyvale, CA. The memory 310 may be one or more fast storage devices configured to store instructions and information executed or used by the CPU 305 to perform certain functions, methods, and processes related to implementations of the present invention. The storage 320 may be a volatile or non-volatile, magnetic, semiconductor, tape, optical, or other type of storage device or computer-readable medium, including devices such as disc drives and solid-state devices, meant for long-term storage.

In the illustrated implementation, the memory 310 contains one or more instructions, programs or applications 315, which may be loaded from the storage 320 or from a remote system (not shown), that, when executed by the CPU 305, perform various operations, procedures, processes, functions or methods consistent with the present invention, e.g., as described in conjunction with FIGs. 1, 2, 4, and 5. Alternatively, the CPU 305 may execute one or more programs located remotely from the system 300. For example, the system 300 may access one or more remote programs via the network 335 that, when executed, perform functions, operations and processes related to implementations of the present invention.

In one implementation, the memory 310 may include a program(s) 315 for performing the specialized functions and operations described herein with regard to the system 100 for tracking vehicle-related usage of resources. In some implementations, the memory 310 may also include other programs or applications that implement other methods and processes that provide ancillary functionality to the invention.

The memory 310 may also be configured with other programs (not shown) unrelated to the invention and/or an operating system (not shown) that performs several functions well known in the art when executed by the CPU 305. By way of example, the operating system may be Microsoft Windows^{™}, Unix^{™}, Linux^{™}, an Apple Computers^{™} operating system, or other operating system. The choice of operating system, and even the use of an operating system, is not critical to the invention.

The HSM 340 may be a device with its own processor that securely generates and/or stores digital security assets (e.g., digital certificates) and/or securely performs a variety of cryptographic and sensitive computations. The HSM 340 protects digital security assets, such as cryptographic keys and digital certificates, and other sensitive data from possible access by an attacker. In some implementations, the HSM may be a plug-in card or board that attaches directly to the computing system 300.

The I/O device(s) 325 may comprise one or more input/output devices that allow data to be communicated, received, and/or transmitted by the system 300. For example, the I/O device 325 may include one or more input devices, such as a keyboard, touch screen, mouse, and the like, that enable data to be input from a user. Further, the I/O device 325 may include one or more output devices, such as a display screen, a CRT monitor, an LCD monitor, a plasma display, a printer, speaker devices, and the like, that enable data to be output or presented to a user. The I/O device 325 may also include one or more digital and/or analog communication input/output devices that allow the computing system 300 to communicate, for example, digitally, with other machines and devices. Other configurations and/or numbers of input and/or output devices may be incorporated in the I/O device 325.

In the implementation shown, the system 300 is connected to a network 335 (such as the Internet, a private network, a virtual private network, a cellular network or other network or combination of these), which may in turn be connected to various systems and computing machines, such as servers, personal computers, laptop computers, client devices, etc. In general, the system 300 may input data from external machines and devices and output data to external machines and devices via the network 335. In some implementations, the network 335 may be, or be part of, the communication paths 500, 600.

In the exemplary implementation shown in FIG. 3, the data repository 330 is a standalone database external to system 300. In other implementations, the data repository 330 may be hosted by the system 300. In various implementations, the data repository 330 may manage and store data used to implement systems and methods consistent with the invention. For example, the data repository 330 may manage and store data (e.g., user account data, the data in multi-resource records 142, etc.) that are used by the vehicle resource usage tracking system 100.

The data repository 330 may comprise one or more databases that store information and are accessed and/or managed through the system 300. By way of example, the repository 330 may be an Oracle^{™} database, a Sybase^{™} database, or other relational database. Systems and methods consistent with the invention, however, are not limited to separate data structures or databases, or even to the use of a repository 330, database, or specific data structure.

One of ordinary skill will recognize that the components and implementation details of the system in FIG. 3 are examples presented for conciseness and clarity of explanation. Other components and implementation details may be used.

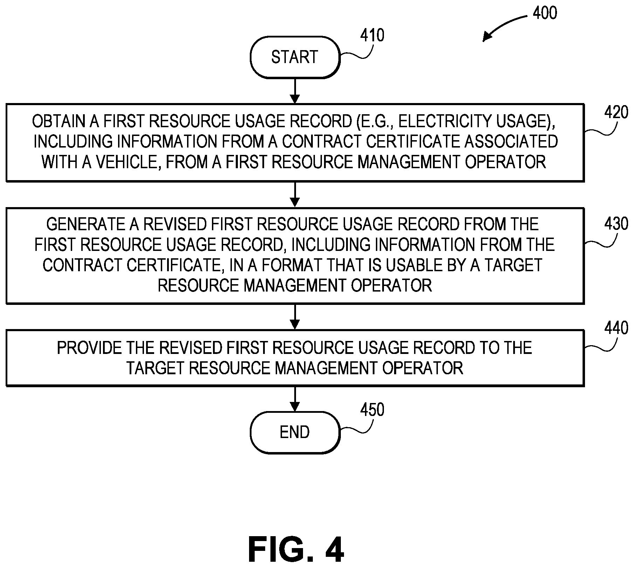

FIG. 4 is a flowchart showing an example of a process 400 for generating a revised resource usage record for use in a multi-resource tracking record, consistent with embodiments of the invention. In the embodiment shown in this example, the process 400 is performed by the MRIP 130. In alternative embodiments, the operations of the process 400 may be performed by an improved resource management operator, such as the road usage (second) RMO 140, the DOT (third) RMO 150, or the like. As noted previously, the operations of the process 400 may be embodied in software instructions (e.g., a program 315) or the like and the device(s) that performs the operations (e.g., executes the instructions) of the process 400 may be a computing device 300, or the like.

As shown in the example of FIG. 4, the process 400 starts at block 410 and begins with obtaining a first resource usage record, for example, an electricity usage resource record 125, at block 420. In various embodiments, the first resource usage record includes data or information from a certificate associated with the vehicle that charged up with the electricity, for example, identification information from the contract certificate 146 that was downloaded and used by the vehicle 110, or its transponder 148, during the electrical charging at a charging station 115. In various embodiments, the first resource usage record is obtained from, or communicated by, a first resource management operator, such as the charging station RMO 120.

At block 430, the process 400 generates a revised first resource usage record in a format that is usable by a target resource management operator that is different than the first resource manager, for example, a revised electricity usage resource record 145 or 155. In various embodiments, the revised first resource usage record includes data or information from the certificate associated with the vehicle that charged up with the electricity, for example, identification information from the contract certificate 146 that was downloaded and used by the vehicle 110, or its transponder 148, during the electrical charging at a charging station 115. This included information from the contract certificate may be similar to or the same as the contract certificate information that was included in the first resource record obtained in block 420. In various embodiments, the revised first resource usage record (e.g., 145, 155) is generated from the data or information in the first resource usage record obtained in block 420 by reformatting, converting, translating, changing, or otherwise processing the information into a format that is usable by, or compatible with, the target resource management operator, such as the second RMO 140 or the third RMO 150.

At block 440, the process 400 provides the revised first resource usage record to the target resource management operator, for example, to the second RMO 140 or the third RMO 150, and then the process ends at 450. In some embodiments, the process 400 may provide the revised first resource usage record via an API of the target resource management operator, where block 430 generates the revised first resource usage record in a format that is usable by that API.

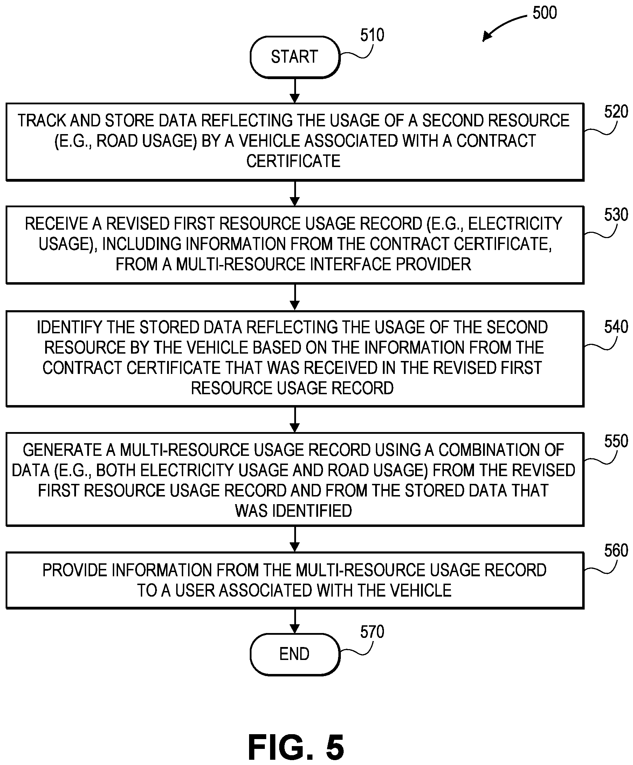

FIG. 5 is a flowchart showing an example of a process 500 for generating a multi-resource tracking record 142, consistent with embodiments of the invention. In the embodiment shown in this example, the process 500 may be performed by a resource management operator (e.g., 140, 150). In alternative embodiments, the operations of the process 500 may be performed by a multi-resource interface provider (e.g. 130), or the like. As noted previously, the operations of the process 500 may be embodied in software instructions (e.g., a program 315) or the like and the device(s) that performs the operations (e.g., executes the instructions) of the process 500 may be a computing device 300, or the like.

As shown in the example of FIG. 5, the process 500 starts at block 510 and begins with tracking and storing data reflecting the usage of a second resource, for example usage of a specific road, by a vehicle (e.g., 110) associated with a contract certificate (e.g., 146), at block 520. The term "second" resource is used to indicate that it is a different resource than the resource referred to in FIG. 4 as the "first" resource.

At block 530, the process 500 receives a revised first resource usage record, for example, a revised electricity usage resource record 145 or 155. In various embodiments, the received revised first resource usage record includes data or information from the certificate associated with the vehicle that charged up with the electricity, for example, identification information from the contract certificate 146 that was downloaded and used by the vehicle 110, or its transponder 148, during the electrical charging at a charging station 115. In various embodiments, a multi-resource interface provider (e.g., 130), or another entity with the functionality thereof, may have the sent the revised first resource usage record.

At block 540, the process 500 identifies the stored data reflecting the usage of the second resource (e.g. road usage) by the vehicle based on the information from the contract certificate that was received in the revised first resource usage record. In various embodiments, this may be done using identifying information (e.g., a unique identifier string, a serial number, or the like) contained in the revised first resource usage record that uniquely identifies one or more of the certificate (e.g., 146), the vehicle (e.g. 110), or the owner 105, and matching the identifying information to previously stored identifying information managed by the resource management operator (e.g., 140, 150), where the previously stored identifying information is associated with the stored data reflecting the usage of the second resource (e.g. road usage) by the same vehicle. In various embodiments, the identifying information from the contract certificate 146 is stored and used by the various entities (e.g., 120, 130, 140, 150) of the system 100 to find and correlate the various types of resource usage information for the vehicle 110, transponder 148, and/or owner 105 that are associated with the contract certificate 146.

At block 550, the process 500 generates a multi-resource usage record using or comprising a combination of data (e.g., both electricity usage data and road usage data) from the revised first resource usage record (e.g., 145, 155) and from the stored data that was identified in block 540. In various embodiments, the multi-resource usage record (e.g., 142, 200) may include information that enables an owner / user 105 to be aware of, track, and/or manage the use of resources associated with a vehicle 110, such as entity identifying information, (e.g., an ID number of a transponder 148, an ID number of a contract certificate 148, an ID number of a vehicle 110, a name of an owner 105, or the like), date of resource usage, time of resource usage, amount of resources used, a location where resources were used, or the like. In some embodiments, the multi-resource usage record (e.g., 142, 200) may also optionally include information specifying a cost for each resource used. As noted previously, examples of the information that may be in a multi-resource usage record may be found in FIG. 2.

At block 560, the process 400 provides information from the multi-resource usage record to a user (e.g., 110) associated with the vehicle (e.g., 105), and then the process ends at 570. Similar to the operations noted previously, the system 100 may use the information from the contract certificate 146 to identify the correct user 110 associated with the vehicle 110. In some embodiments, the information provided to the user may be a website display or a report containing the information shown in FIG. 2, or the like.

One of ordinary skill will recognize that the blocks, operations, functions, sending entities, receiving entities, and details shown in FIGs. 4 and 5 are examples presented for conciseness and clarity of explanation. Other blocks, operations, functions, sending entities, receiving entities, details, and variations may be used without departing from the principles of the invention, as these examples are not intended to be limiting and many different implementations are possible. For example, the order of the blocks may be varied, some blocks may be executed in parallel with others, or the functionality of two more blocks may be combined into a single block. For another example, block 530 could receive multiple revised first resource usage records 145 and block 550 could generate a multi-resource usage record that combines data from the multiple revised first resource usage records 145 with stored data from the hosting RMO (e.g., 140). For yet another example, a modified version of the process 500 could be performed by the MRIP 130, which may operate to: not perform block 520; receive multiple revised first resource usage records 145 at block 530 and store them; identify all the received corresponding revised first resource usage records 145 at block 540; and generate a multi-resource usage record that combines data from all of the identified multiple revised first resource usage records 145 at block 550. Other variations are possible.

Although the foregoing embodiments employ specific examples in the realm of electric road vehicles (e.g., electric or hybrid cars and trucks), road resource usage (e.g., toll roads), electricity usage, and DOT resource usage for clarity of explanation, the invention is not limited to those specific examples. For example, various implementations consistent with the invention may be used with and for a wide variety of vehicles, such as gasoline or diesel fueled road vehicles, water vehicles, recreational vehicles, and aircraft, among others.

The various operations of the applications described herein may be performed, at least partially, by one or more virtual machines (VMs). In additional or alternative implementations, the operations of the applications described herein may be performed, at least partially by one or more processors that are temporarily configured (e.g., by software instructions) or permanently configured to perform the relevant operations. Whether temporarily or permanently configured, such processors may constitute processor-implemented modules that operate to perform one or more application operations, functions, and roles described herein.

Similarly, the processes, functions, and operations described herein may be at least partially processor-implemented, with a particular processor or processors being an example of hardware. For example, at least some of the operations of a function may be performed by one or more processors or processor-implemented modules. Moreover, the one or more processors may also operate to support performance of the relevant operations in a 'cloud computing' environment or as a 'software as a service' (SaaS). For example, at least some of the operations may be performed by a group of computers (as examples of machines including processors), with these operations being accessible via a network (e.g., the Internet) and via one or more appropriate interfaces (e.g., an application programming interface (API)).

The performance of certain of the operations may be distributed among the processors, not only residing within a single machine, but deployed across a number of machines. In some example embodiments, the processors or processor-implemented modules may be located in a single geographic location (e.g., within an office environment, a manufacturing environment, or a server farm). In other example embodiments, the processors or processor-implemented modules may be distributed across a number of geographic locations.

Other embodiments of the invention will be apparent to those skilled in the art from consideration of the specification and practice of the invention disclosed herein. It is intended that this specification and examples be considered as examples only, with a true scope and spirit of the invention being indicated by the claims.

## Claims

1. A system for managing data from a first resource management operator that tracks usage of a first resource by a vehicle associated with a contract certificate, the system comprising:
a second resource management operator that tracks usage of a second resource by the vehicle associated with the contract certificate; and
a multi-resource interface provider that is operably connected with the first resource management operator and the second resource management operator, and that performs operations comprising:
obtaining the first resource usage record from the first resource management operator, wherein the first resource usage record includes information from the contract certificate;
generating a revised first resource usage record from data in the first resource usage record, wherein the revised first resource usage record is in a format that is usable by the second resource management operator and includes information from the contract certificate; and
providing the revised first resource usage record to the second resource management operator; and
wherein the second resource management operator performs operations comprising:
identifying data about the usage of the second resource by the vehicle based on the information from the contract certificate;
combining data from the revised first resource usage record with the identified data about the usage of the second resource by the vehicle associated with the contract certificate;
generating a multi-resource usage record using the combined data; and
providing information from the multi-resource usage record to a user associated with the vehicle.

2. The system of claim 1, wherein the multi-resource interface provider performs operations further comprising:
producing the contract certificate; and
providing the contract certificate to the second resource management operator; and
wherein the second resource management operator performs operations further comprising:
providing the contract certificate to the vehicle.

3. The system of claim 1 or 2, wherein the second resource management operator performs operations further comprising: associating the contract certificate with a transponder that is associated with the vehicle.

4. The system of at least one of the preceding claims, wherein the contract certificate is stored by the vehicle.

5. The system of at least one of the preceding claims, wherein the contract certificate is stored by a transponder associated with the vehicle.

6. The system of at least one of the preceding claims, wherein the first resource is at least one of: an electricity resource, a road usage resource, or a department of transportation resource.

7. The system of at least one of the preceding claims, wherein the second resource is at least one of: an electricity resource, a road usage resource, or a department of transportation resource.

8. The system of at least one of the preceding claims, wherein generating the revised first resource usage record from data in the first resource usage record comprises:
including data from the contract certificate in the revised first resource usage record.

9. The system of at least one of the preceding claims, wherein generating the revised first resource usage record from data in the first resource usage record comprises:
converting data from the first resource usage record into the format that is usable by the second resource management operator.
